Europäisches Patentamt

European Patent Office

Office européen des brevets

(19)

(11) Veröffentlichungsnummer: **0 200 715**
**A2**

(12) ## EUROPÄISCHE PATENTANMELDUNG

(21) Anmeldenummer: 86890110.9

(22) Anmeldetag: 22.04.86

(51) Int. Cl.⁴: **B 21 C 5/00**

(30) Priorität: 02.05.85 AT 1317/85

(43) Veröffentlichungstag der Anmeldung:
05.11.86 Patentblatt 86/45

(84) Benannte Vertragsstaaten:
BE CH DE FR GB IT LI LU NL SE

(71) Anmelder: VOEST-ALPINE Aktiengesellschaft
Friedrichstrasse 4
A-1011 Wien(AT)

(72) Erfinder: Mayr, Alfred
Harterfeldstrasse 12
A-4060 Leonding(AT)

(74) Vertreter: Haffner, Thomas M., Dr. et al,
Patentanwaltskanzlei Dipl.-Ing. Adolf Kretschmer Dr.
Thomas M. Haffner Schottengasse 3a
A-1014 Wien(AT)

(54) **Verfahren zum Anspitzen von Knüppeln sowie Vorrichtung zur Durchführung dieses Verfahrens.**

(57) Zum Anspitzen von Knüppeln für die Erleichterung des Ansetzens an ein nachfolgendes Walzgerüst erfolgt zunächst ein spitzwinkeliges Zuschneiden einer Fläche des Knüppels, worauf unmittelbar anschließend im gleichen Arbeitsgang eine Verformung einer benachbarten Fläche durch zur Spitze abfallende Preßflächen erfolgt. Ein Preßstempel 8 ist hiezu mit einer Schneidkante 11 und einer Preßfläche 9 ausgebildet. Die Schneidkante eilt gegenüber der Preßfläche 9 vor, wobei die Verformung des Knüppels gegen im Querschnitt im wesentlichen rechtwinkelig aufeinander stehende Flächen eines Gesenkes 10 erfolgt.

FIG. 3

EP 0 200 715 A2

## Verfahren zum Anspitzen von Knüppeln sowie Vorrichtung zur Durchführung dieses Verfahrens

Die Erfindung bezieht sich auf ein Verfahren zum Anspitzen von Knüppeln mit im wesentlichen rechteckigem Querschnitt durch Schneiden und Pressen, bei welchem die einer geschnittenen Schrägfläche benachbarte Fläche durch Pressen bearbeitet wird, sowie auf eine Vorrichtung zur Durchführung dieses Verfahrens.

Bei der Verarbeitung von Walzgut ist es erforderlich, im wesentlichen quadratische Walzknüppel einer Verarbeitungsstraße zuzuführen, bei welcher das zu verarbeitende Gut auf die gewünschten Endquerschnitte bzw. Profile gebracht wird. Zu diesem Zweck müssen Walzknüppel, beispielsweise einem Walzgerüst, zugeführt werden. Bedingt durch die Herstellungsweise von Walzknüppeln, welche abwechselnd diagonal gewalzt werden, wird in der Regel ein Vorprodukt erzielt, welches Unregelmäßigkeiten in der Außenkontur und in der Stirnfläche aufweist. Bei der Verarbeitung von Automatenstählen kommt noch die Schwierigkeit hinzu, daß diese Stähle im Heißzustand bruchempfindlich sind und ein Fehler beim Anstich in ein nachfolgendes Walzgerüst kann zu unerwünschten Deformationen in die Breite und damit zu schwerwiegenden Produktionsbeeinträchtigungen führen.

Aus der DE-PS 438 915 ist bereits ein Verfahren zum Zuspitzen der Enden von Zieh- und Walzgut bekanntgeworden, bei welchem eine Querschnittsverjüngung an den Enden des Walzgutes durch Schneiden mittels zweier spitzwinkelig zueinander stehender Messer auf eine keilförmige Gestalt und anschließend durch Pressen auf konischen oder prismatischen Querschnitt verformt wurde. Ein derartiger Arbeitsgang ist verhältnismäßig zeitraubend und aus diesen Gründen in einer automatischen Produktion mit hoher Straßengeschwindigkeit nicht ohne weiteres verwendbar. Es ist weiters bereits bekannt, Knüppel vor dem Walzenanstich mittels Brennschneidern asymmetrisch anzuspitzen, jedoch ist diese Verfahrensweise bei Automatenstählen mit einer Reihe von Nachteilen verbunden. Automatenstähle enthalten in der Regel eine Reihe von Legierungselementen, welche beim Schneiden mittels Schneidbrennern zu giftigen Gasen führen, wobei in erster Linie Bleidämpfe, Schwefelverbindungen, Selen, Tellur und Thallium als giftige Komponenten berücksichtigt werden müssen. Die Verwendung von Schneidbrennern zum Anspitzen von Knüppeln kann darüberhinaus auch nicht mit der für eine Integration in automatische Hochgeschwindigkeitsstraßen erforderlichen Geschwindigkeit vorgenommen werden, wobei dies zusätzlich zur hohen Umweltbelastung und dem großen Sicherheitsrisiko in diesen Fällen zu berücksichtigen ist.

Die Erfindung zielt nun darauf ab, ein rasches, in einen automatischen Verfahrensablauf integrierbares, Verfahren zu schaffen, bei welcher mit überaus kurzen Maschinentaktzeiten das Auslangen gefunden wird und weder giftige Dämpfe noch thermische Schäden an den Knüppeln auftreten. Zur Lösung dieser Aufgabe besteht das erfindungsgemäße Verfahren darin, daß eine Seite des anzuspitzenden Gutes mechanisch geschnitten und eine der zu schneidenden Fläche benachbarte Fläche vor Fertigstellung des Schnittes mit einer zur auszubildenden Spitze abfallenden Preßfläche eines Preßstempels beaufschlagt wird. Auf diese Weise können in einem gemeinsamen Arbeitshub eines Preßstempels sowohl die mechanische Schneidarbeit als auch die Verformung vorgenommen werden, wobei eine asymmetrische Anspitzung des Knüppels erzielt wird. Dieses Verfahren läßt sich mit extrem kurzen Taktzeiten ausüben und eignet sich daher für einen Einsatz in automatischen Hochleistungsstraßen.

Die erfindungsgemäße Vorrichtung zur Durchführung dieses Verfahrens ist im wesentlichen dadurch gekennzeichnet, daß quer zur Längsachse des anzuspitzenden Gutes ein Preßstempel verschieblich geführt ist, und daß der Preßstempel mit einer zur Längsachse des Gutes abfallenden sich zum Vorderende des Gutes in der Draufsicht verjüngenden Preßfläche und an einer die Preßfläche in Anstellrichtung des Preßstempels übergreifenden, zur Längsachse des Gutes in Richtung zum Vorderende des Gutes spitzwinkelig angeordneten Fläche mit einer Schneidkante ausgebildet ist. Auf diese Weise wird eine konstruktiv verhältnismäßig einfache Vorrichtung geschaffen, bei welcher voreilend mit der Schneidkante ein Teil des Endbereiches des Knüppels abgeschnitten wird, worauf noch vor Beendigung der Schneidarbeit eine der Schneidkante benachbarte Fläche durch die Preßfläche des Preßstempels zur Spitze hin auf geringeren Querschnitt verformt wird. Das durch die Pressung verdrängte Material wird in der Folge durch die voreilende Schneidkante weggeschnitten, so daß sich insgesamt eine asymmetrische Anspitzung des Knüppels ergibt.

In einfacher Weise kann hiebei die Schneidkante in an sich bekannter Weise von einer mit dem Preßstempel verbundenen Messerplatte gebildet sein. Sowohl die Preßfläche des Stempels als auch die Messerplatte sind hiebei Verschleißteile, welche mit dem Preßstempel lösbar verbunden sein können und entsprechend der geforderten Ausgangs- und Endquerschnitten der Verformung jeweils exakt den Erfordernissen angepaßt werden können.

Um eine exakte Schnittbegrenzung am Ende des Preßhubes zu erzielen, ist mit Vorteil die Auflage des Gutes bzw. Knüppels im Bereich des Preßhubes in an sich bekannter Weise mit einem zum Messer des Preßstempels parallelen Gegenmesser ausgebildet. Auch dieses Gegenmesser kann als lösbar verbundener Verschleißteil ausgebildet sein, welcher mit der Auflagefläche, insbesondere einem Gesenk, verbunden ist. Mit Vorteil ist hiebei die Höhe der Messerplatte ausgehend von dem Beginn der abfallenden Preßfläche größer als die Querschnittshöhe des Gutes und übersteigt diese Querschnittshöhe um wenigstens 10%, vorzugsweise etwa die Querschnittshöhe des angespitzten Endes des Gutes. Auf diese Weise wird ein bestimmtes Maß des Voreilens des Schnittes zur Pressung gewährleistet und es wird ein exakter Schnitt und eine definierte Querschnittsabnahme bis zum Ende des Preßhubes gewährleistet.

Um Unregelmäßigkeiten der Stirnfläche des angespitzten Knüppels zu verhindern, ist mit Vorteil der Preßstempel mit einer über die Unterkante des Messers vorragenden, quer zur Längsachse des Gutes orientierten Anschlagplatte ausgestattet. Diese Anschlagplatte kann zwar prinzipiell mit dem Gesenk verbunden sein. Bei der Verbindung dieser Anschlagplatte mit dem Preßstempel könnte sie ohne weiteres auch als zusätzliche Messerkante für eine ebene und exakte Stirnfläche des angespitzten Endes ausgebildet sein. Um eine saubere Kontur der Stirnfläche des angespitzten Endes sicherzustellen, ist hiebei die Ausbildung mit Vorteil so getroffen, daß die Unterkante der Anschlagplatte die Unterkante des Messers um etwa die Querschnittshöhe des Gutes überragt.

Um während des Schneid- bzw. Preßhubes des Preßstempels Verformungen des Knüppels, insbesondere aus der Längsachse des Knüppels heraus, mit Sicherheit hintanzuhalten, können quer zur Längsachse des Gutes parallel zum Preßstempel bewegliche Niederhalter vorgesehen sein. Diese Niederhalter können theoretisch unter Zwischenschaltung von Federn zur Verringerung der Anstellkraft mit dem Preßstempel verbunden sein, jedoch hat es sich als vorteilhaft erwiesen, hiefür gesonderte, insbesondere hydraulisch angetriebene Niederhalter, einzusetzen.

Beim Schneid- und Preßvorgang verbleiben zwei Kanten des Querschnittsprofiles des Knüppels im wesentlichen unverändert. Um die Preß- und Schneidkräfte sicher aufzunehmen, ist mit Vorteil das Gegenmesser mit einem im Schnitt quer zur Achse des Gutes rechtwinkelig zueinander und parallel zur Längsachse des Gutes stehende Flächen aufweisenden Gesenk verbunden.

Eine weitere Verkürzung der Taktzeit der Vorrichtung läßt sich dadurch erreichen, daß seitlich an das Gesenk eine Rutsche zum Ausbringen des angespitzten Gutes angeschlossen ist. Auf diese Weise läßt sich unmittelbar nach dem Preß- und Schneidhub der entsprechend angespitzte Knüppel seitlich ausbringen und es kann ein neuer Knüppel der Vorrichtung zugeführt werden. Der Verkürzung der Taktzeit dient auch mit Vorteil die Maßnahme, daß der Arbeitshub des Preßstempels die Querschnittshöhe des des Gutes um 10 - 40%, vorzugsweise etwa 20%, übersteigt.

Die erfindungsgemäße Einrichtung läßt sich in einfacher Weise dadurch in ihrer Kapazität steigern, daß das Gesenk einen parallel zur Längsachse des Gutes verlaufenden Steg aufweist, mit welchen zu beiden Seiten der Längsmitte symmetrisch angeordnete Preß- und Schneidbacken zusammenwirken. Bei einer derartigen Ausbildung des Gesenkes lassen sich gleichzeitig zwei Knüppel in der gewünschten Weise anspitzen, wobei dieser Vorgang im wesentlichen symmetrisch zur Längsmittelebene der Vorrichtung erfolgt. Um die auftretenden Schneid- und Verformungskräfte sicher aufzunehmen, können mit Vorteil quer zum Preßhub verschiebliche Anpreßzylinder im Bereich der Preßbacken vorgesehen sein.

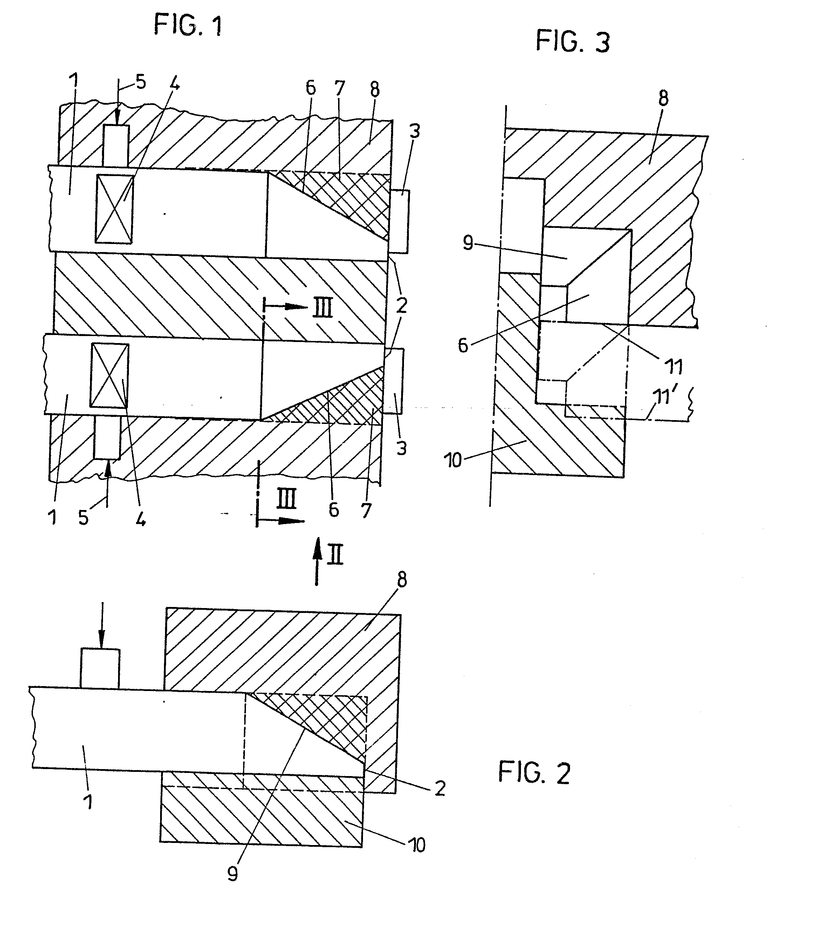

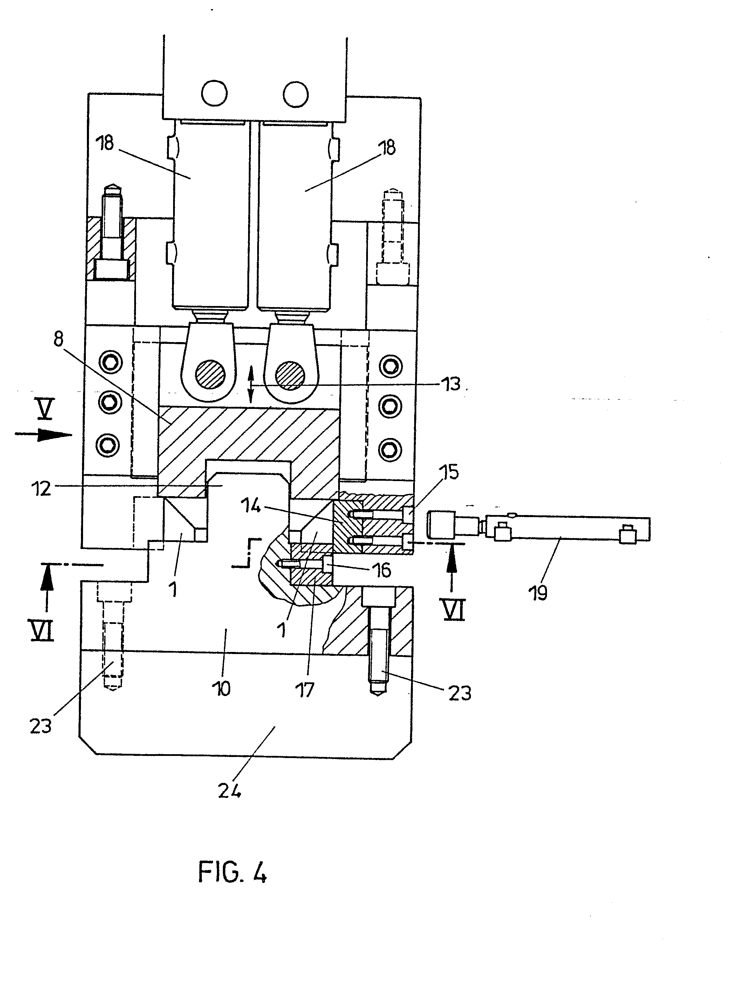

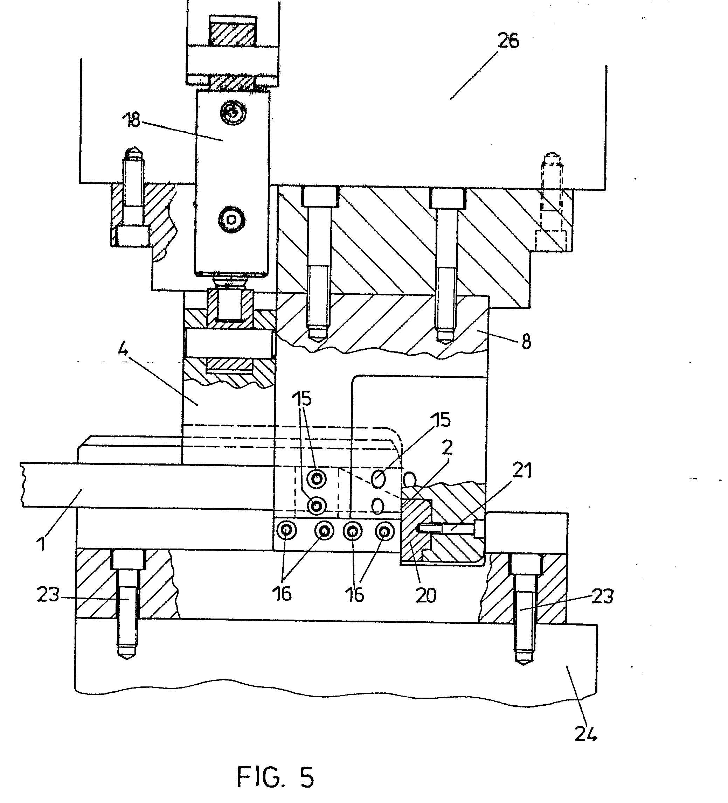

Die Erfindung wird nachfolgend an Hand eines in der Zeichnung schematisch dargestellten Ausführungsbeispieles näher erläutert. In dieser zeigen Fig.1 schematisch den Arbeitsvorgang des Abschneidens in der Draufsicht, Fig.2 den Preßvorgang in der Sicht in Richtung des Pfeiles II der Fig.1, Fig.3 einen Schnitt nach der Linie III-III der Fig.1, Fig.4 eine Ansicht analog der Darstellung in Fig.3 durch eine Einrichtung, bei welcher zwei Knüppel gleichzeitig angespitzt werden, Fig.5 eine Ansicht der Fig.4 in Richtung des Pfeiles

- 6 -

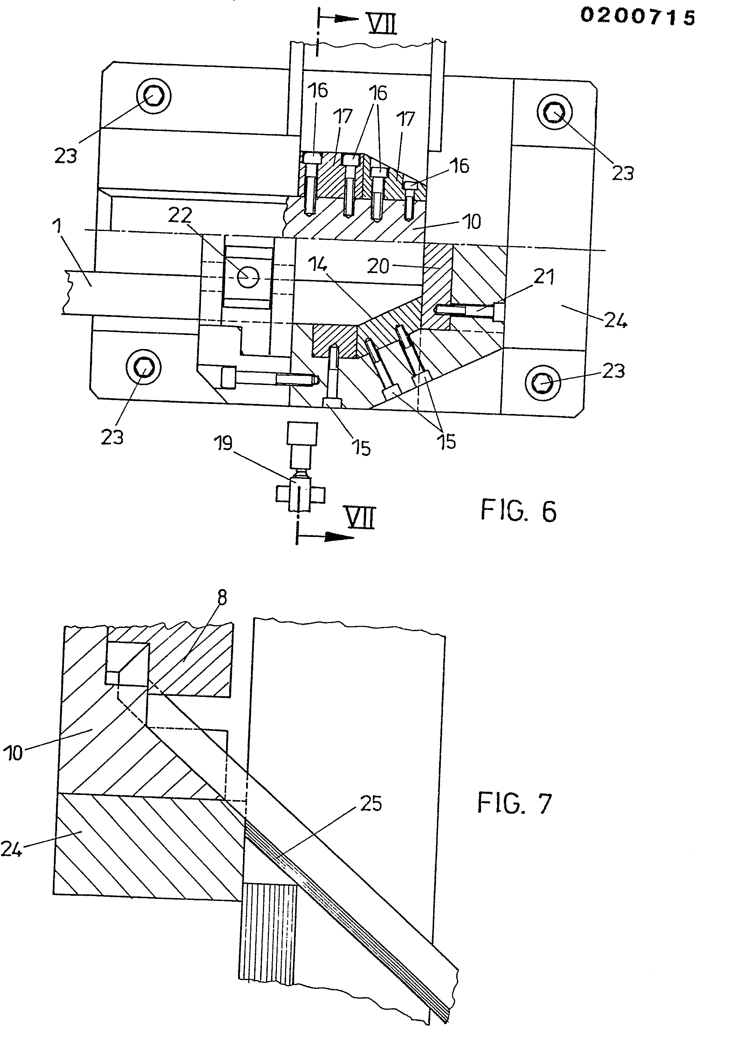

V teilweise im Schnitt, Fig.6 einen Schnitt nach der Linie VI-VI der Fig.4 und Fig.7 einen Schnitt durch die untere Hälfte der Fig.6 nach der Linie VII-VII der Fig.6.

In Fig.1 sind schematisch zwei Knüppel 1 dargestellt, welche mit ihren Stirnflächen 2 gegen einen Anschlag 3 bewegt wurden. Die Knüppel 1 werden durch Niederhalter 4 und durch seitliche Anpreßzylinder, welche im Sinne der Pfeile 5 angreifen, in ihrer Lage gehalten. Im Bereich der Vorderenden der Knüppel wird mit einer Schnittfläche 6, welche zur Längsachse der Knüppel geneigt angeordnet ist ein Schnitt gelegt, wodurch die schraffierten Bereiche 7 abgetrennt werden.

Anschließend an den Beginn dieses Schnittes nach Fig.1 erfolgt mittels eines Preßstempels 8 mit zur Stirnfläche 2 der Knüppel 1 geneigter Preßfläche 9 eine Pressung bzw. ein Schmieden der der Schnittfläche benachbarten Fläche des Knüppels 1. Das Gesenk ist hiebei mit 10 bezeichnet.

Die geometrische Konfiguration der Schnittfläche bzw. der Preßfläche des Stempels 8 ist aus Fig.3 zu entnehmen. Die Schnittfläche 6 des Stempels 8 wird hiebei von einer Messerfläche gebildet, deren Schneidkante 11 am Ende des Anstellhubes mit der entsprechenden Gegenkante des Gesenkes 10 zusammenwirkt und diese Kante übergreift. Die Endstellung am Ende des Anspitzvorganges ist hiebei durch die Position 11' der Schneidkante angedeutet.

Bei der Ausbildung nach Fig.4 weist das Gesenk 10 einen mittigen Steg 12 auf, so daß gleichzeitig zwei Knüppel 1 zu beiden Seiten des mittigen Steges 12 angespitzt werden können. Der Preßstempel 8 wird durch nicht dargestellte Preßzylinder in Richtung des Doppelpfeiles 13 angetrieben und trägt Messerplatten 14, welche mittels Schrauben 15 lösbar mit dem Preßstempel 8 verbunden sind. Das Gesenk 10 weist mittels Schrauben 16 lösbar verbundene Gegenmesser 17 auf.

In Fig.4 sind die Anstellzylinder der Niederhalter 4 mit 18 bezeichnet. Es sind weiters die seitlichen Anpreßzylinder 19 ersichtlich.

Wie sich aus Fig.5 ergibt, ist der Preßstempel 8 mit einer Stösselplatte 26 für den Pressenantrieb verbunden. Der Preßstempel 8 weist eine mit der Stirnseite 2 des Knüppels 1 zusammenwirkende Anschlagplatte 20 auf. Diese Anschlagplatte ist durch Schrauben 21 lösbar mit dem Preßstempel 8 verbunden.

In der geschnittenen Draufsicht nach Fig.6 ist im oberen Teil aufgrund der Schnittführung gemäß der Linie VI-VI der Fig.4 die Befestigung der Gegenmesser 17 am Gesenk 10 und im unteren Teil die Befestigung der Anschlagplatte 20 sowie der Messer 14 am Preßstempel 8 ersichtlich. Die Achse der Zylinder 18 für die Niederhalter ist mit 22 angedeutet. Die Festlegung der Vorrichtung erfolgt mittels Schrauben 23 an einer Tischplatte 24.

Aus der Darstellung nach Fig.7 ergibt sich die an das Gesenk 10 und die Tischplatte 24 anschließende Rutsche 25 für den seitlichen Auswurf des angespitzten Knüppels.

Patentansprüche:

1. Verfahren zum Anspitzen von Knüppeln (1) mit im wesentlichen rechteckigem Querschnitt durch Schneiden und Pressen, bei welchem die einer geschnittenen Schrägfläche benachbarte Fläche durch Pressen bearbeitet wird, dadurch gekennzeichnet, daß eine Seite des anzuspitzenden Gutes (1) mechanisch geschnitten und eine der zu schneidenden Fläche benachbarte Fläche vor Fertigstellung des Schnittes mit einer zur auszubildenden Spitze (2) abfallenden Preßfläche (9) eines Preßstempels (8) beaufschlagt wird.

2. Vorrichtung zur Durchführung des Verfahrens nach Anspruch 1, dadurch gekennzeichnet, daß quer zur Längsachse des anzuspitzenden Gutes (1) ein Preßstempel (8) verschieblich geführt ist, und daß der Preßstempel (8) mit einer zur Längsachse des Gutes (1) abfallenden sich zum Vorderende (2) des Gutes (1) in der Draufsicht verjüngenden Preßfläche (9) und an einer die Preßfläche (9) in Anstellrichtung des Preßstempels (8) übergreifenden, zum Vorderende (2) des Gutes (1) spitzwinkelig angeordneten Fläche (6) mit einer Schneidkante (11) ausgebildet ist.

3. Vorrichtung nach Anspruch 2, dadurch gekennzeichnet, daß die Schneidkante (11) in an sich bekannter Weise von einer mit dem Preßstempel (8) verbundenen Messerplatte (14) gebildet ist.

4. Vorrichtung nach Anspruch 2 oder 3, dadurch gekennzeichnet, daß die Auflage des Gutes (1) im Bereich des Pressenhubes in an sich bekannter Weise ein zum Messer (14) des Preßstempels (8) paralleles Gegenmesser (17) aufweist.

5. Vorrichtung nach einem der Ansprüche 2 bis 4, dadurch gekennzeichnet, daß die Höhe der Messerplatte (14) ausgehend von dem Beginn der abfallenden Preßfläche (9) größer ist als

- 9 -

die Querschnittshöhe des Gutes (1) und diese Querschnittshöhe um wenigstens 10 %, vorzugsweise etwa die Querschnittshöhe des angespitzten Endes (2) des Gutes (1), übersteigt.

6. Vorrichtung nach einem der Ansprüche 2 bis 5, dadurch gekennzeichnet, daß der Preßstempel (8) eine über die Unterkante des Messers (14) vorragende, quer zur Längsachse des Gutes (1) orientierte, Anschlagplatte (20) aufweist.

7. Vorrichtung nach Anspruch 6, dadurch gekennzeichnet, daß die Unterkante der Anschlagplatte (20) die Unterkante des Messers (14) um etwa die Querschnittshöhe des Gutes (1) überragt.

8. Vorrichtung nach einem der Ansprüche 2 bis 7, dadurch gekennzeichnet, daß das Gegenmesser (17) mit einem im Schnitt quer zur Achse des Gutes (1) rechtwinkelig zueinander und parallel zur Längsachse des Gutes (1) stehende Flächen aufweisenden Gesenk (10) verbunden ist.

9. Vorrichtung nach einem der Ansprüche 2 bis 8, dadurch gekennzeichnet, daß der Arbeitshub des Preßstempels (8) die Querschnittshöhe des Gutes (1) um 10 - 40 %, vorzugsweise etwa 20 %, übersteigt.

10. Vorrichtung nach einem der Ansprüche 2 bis 9, dadurch gekennzeichnet, daß das Gesenk (10) einen parallel zur Längsachse des Gutes (1) verlaufenden Steg (12) aufweist, mit welchem zu beiden Seiten der Längsmitte symmetrisch angeordnete Preß- und Schneidbacken zusammenwirken.

11. Vorrichtung nach einem der Ansprüche 2 bis 10, dadurch gekennzeichnet, daß quer zum Pressenhub verschiebliche Anpreßzylinder (19) vorgesehen sind.

FIG. 1

FIG. 3

FIG. 2

FIG. 4

0200715

FIG. 5

FIG. 6

FIG. 7